(19) Europäisches Patentamt
European Patent Office
Office européen des brevets

(11) **EP 2 550 451 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **11710761.5**

(22) Anmeldetag: **23.03.2011**

(51) Int Cl.:
*F03D 7/04* (2006.01)     *H02J 9/04* (2006.01)
*F03B 15/00* (2006.01)

(86) Internationale Anmeldenummer:
**PCT/EP2011/054438**

(87) Internationale Veröffentlichungsnummer:
**WO 2011/117293 (29.09.2011 Gazette 2011/39)**

(54) **NOTBETRIEBSFÄHIGE PITCHANTRIEBSVORRICHTUNG FÜR EINE WIND- ODER WASSERKRAFTANLAGE**

PITCH DRIVE DEVICE CAPABLE OF EMERGENCY OPERATION FOR A WIND OR WATER POWER PLANT

DISPOSITIF D'ENTRAÎNEMENT DE CALAGE POUVANT ÊTRE UTILISÉ EN FONCTIONNEMENT DE SECOURS POUR UNE ÉOLIENNE OU UNE INSTALLATION DE CENTRALE HYDROÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2010 DE 102010016105**

(43) Veröffentlichungstag der Anmeldung:
**30.01.2013 Patentblatt 2013/05**

(73) Patentinhaber: **Moog Unna GmbH**
**59423 Unna (DE)**

(72) Erfinder:
• **THEOPOLD, Tobias**
**44263 Dortmund (DE)**
• **KAUKE, Lars**
**58730 Fröndenberg (DE)**

(74) Vertreter: **Schmalz, Günther**
**Withers & Rogers LLP**
**4 More London Riverside**
**London SE1 2AU (GB)**

(56) Entgegenhaltungen:
**EP-A2- 1 128 064     DE-A1- 10 335 575**
**US-A1- 2009 155 075**

EP 2 550 451 B1

**Beschreibung**

STAND DER TECHNIK

Die vorliegende Erfindung betrifft eine notbetriebsfähige Pitchantriebsvorrichtung zur Verstellung eines Rotorblattpitches einer Wind- oder Wasserkraftanlage.

Gattungsgemäße Vorrichtungen dienen zur Veränderung eines Anstellwinkels (Pitches) gegenüber einem strömenden Medium Luft oder Wasser eines Rotorblattes zum Antrieb einer Energieerzeugungsvorrichtung, insbesondere einem Stromgenerator.

Aus dem Stand der Technik ist der Einsatz von DC und AC Asynchronmotoren (ASM) in elektromechanischen Antriebssystemen zur Verstellung des Rotorblatts eines Rotors einer Wind- oder Wasserkraftanlage bekannt, die drehzahlgesteuert werden können. DC Maschinen werden eingesetzt, da sie eine Notfahrt des Rotorblatts in eine Fahnenstellung auch bei einem Ausfall einer Steuerungs- und Leistungselektronik ermöglichen, wobei ein Akku- oder Batterieblock die Gleichspannungsversorgung bei Netzausfall übernimmt. AC Maschinen werden häufig eingesetzt, da sie quasi wartungsfrei und kostengünstig sind und hohe Drehmomentleistungen zur Verfügung stellen können. Als AC-Maschinen kommen in der Regel Asynchronmotoren zum Einsatz, die in den meisten Fällen durch eine Leistungselektronik drehzahlsteuerbar sind, wobei diese in der Regel eine Gleich- und einen Wechselrichtereinrichtung sowie eine Regelungseinrichtung zur PWM-Ansteuerung der Motorwicklungen umfassen. Für einen Notbetrieb sind in vielen Fällen alternative DC-Antriebe vorgesehen, die mittels einer Gleichspannungsquelle bei Netzausfall eine Notfahrt durchführen können.

Eine Drehzahlregelung wird in der Regel auf Basis von Messdaten von Drehzahl- oder Positionssensoren durchgeführt. Im Falle eines Sensorausfalls können ASM im V/f Betrieb (Spannung/Frequenz-Regelung) gesteuert in eine sichere Lage, insbesondere Fahnenstellung verfahren werden. Bei DC- wie AC Motortypen ist es möglich eine Feldschwächung durchzuführen, um auch bei geringen Gleichspannungs-Zwischenkreisspannungen hohe Drehzahlen zu ermöglich. Ein Feldschwächbetrieb bedeutet, dass bei zunehmender Drehzahl die Stärke des antreibenden Magnetfelds abgeschwächt wird, wobei der Strom konstant bleibt. Hierbei nimmt das abgebbare Drehmoment ebenfalls ab, da sich das Drehmoment als Produkt aus magnetischem Feld und Strom ergibt.

In der DE 103 35 575 A1 ist eine Pitchantriebsvorrichtung für einen Notbetrieb beschrieben, bei der ein Energiespeicher mittels eines Gleichrichters eines Umrichters gespeist wird. Die Speisung erfolgt schaltbar über einen Aufladewiderstand. Im Notbetriebsfall kann der Zwischenkreis über eine Entkopplungsdiode bestromt werden, wobei der Energiespeicher eine sehr hohe Kapazität aufweist, so dass die Höhe der Normalbetriebs-Zwischenkreisnennspannung im Notbetrieb über längere Zeit, insbesondere mehrere Sekunden aufrechterhalten bleibt. Als Pitchmotor kommt ein gewöhnlicher Drehstrommotor zum Einsatz.

Aus der US 2009/0155075 A1 geht eine Pitchantriebsvorrichtung hervor, bei der bei einer Fehlfunktion einer netzgebundenen Wechselrichtersteuerung des Pitchmotors zwischen der netzgebundenen Wechselrichtersteuerung und einer unterbrechungsfreien Notbetriebs-Wechselrichtersteuerung umgeschaltet werden kann. Hierbei ist eine feldorientierte Vektorregelungseinheit zur sensorlosen Drehzahlregelung vorgesehen.

Aus dem Stand der Technik ergeben sich einige Nachteile: DC Motoren sind sehr kostspielig und wartungsintensiv. Aufgrund ihrer geringen Leistungsdichte ist ihr Trägheitsmoment generell hoch. Hierdurch sind diese Motoren nicht für dynamische Anwendungen wie eine kontinuierliche Einzelblattregelung im Reversierbetrieb geeignet. AC Maschinen haben den Nachteil, dass das theoretische Spitzenmoment quadratisch mit der Spannung sinkt. Aufgrund der im Fehlerfall niedrigen Zwischenkreisspannung $U_{ZK}$ von unter 400 Volt müssen sie für eine niedrige Spannung ausgelegt werden und erzwingen einen hohen Stromfluss, den der Wechselrichter bereitstellen muss.

Diese Nachteile werden durch eine Vorrichtung nach dem unabhängigen Anspruch 1 gelöst. Vorteilhafte Weiterentwicklungen sind Gegenstand der Unteransprüche.

OFFENBARUNG DER ERFINDUNG

Erfindungsgemäß wird eine notbetriebsfähige Pitchantriebsvorrichtung zur Verstellung eines Rotorblatts einer Wind- oder Wasserkraftanlage vorgeschlagen, die zumindest einen eine Wechselrichtereinrichtung und einen Drehstrom-Antriebsmotor umfasst. Der Drehstrom-Antriebsmotor ist als permanentmagneterregter Drehstrom-IPM-Synchronmotor (Interior Permanent Magnet) ausgeführt. Ein IPM-Synchronmotor mit einem permanentmagnetbestückten Läufer, dessen Magnete im Läuferinneren vergraben sind, kann im Fall absinkender Zwischenkreisspannung, beispielsweise beim Ausfall von einer oder zweier Netzphasen einer Drehstrom-Netzversorgung, einem Defekt eines Zweigs eines Gleich- oder Wechselrichters oder im Falle eines Notbetriebs durch eine Zwischenkreis-Notbetriebsgleichspannungsquelle, ein höheres Drehmoment als ein vergleichbarer konventioneller Synchronmotor mit gleichstromversorgtem Drehspulenläufer oder SPM-Läufer (Surface Attached Permanent Magnet)-Läufer) erreichen. Somit kann ein hohes Drehmoment im Fall absinkender Versorgungsspannung, insbesondere im Fehlerfall erreicht und eine schnelle Notfahrt oder Rotorverstellung im Fehlerfall gewährleistet werden. Hierdurch wird die Robustheit der Rotorblatt-Verstellvorrichtung deutlich verbessert und die Sicherheit der Energieanlage erhöht.

Erfindungsgemäß wird für einen Notbetrieb eine Gleichspannungs-Energiespeichereinrichtung im wesentlichen unmittelbar an einen Gleichspannungs-Zwischenkreis zwischen einer Gleichrichtereinrichtung und der Wechselrichtereinrichtung zur zumindest kurzfristigen Energieversorgung des Synchronmotors geschaltet, so dass der IPM-Synchronmotor auch bei einer absinkenden Zwischenkreisspannung $V_{ZK}$ zumindest kurzfristig drehzahlgeregelt betrieben werden kann. Somit kann zumindest im Notbetrieb die Energiespeichereinrichtung unmittelbar DC-Energie in den Zwischenkreis zwischen Gleichrichter- und Wechselrichtereinrichtung einspeisen, und der Synchronmotor drehzahlgeregelt betrieben werden, solange die Energiespeichereinrichtung Energie bereitstellen kann.

Daneben kann erfindungsgemäß die Gleichspannungs-Energiespeichereinrichtung über eine Kopplungseinheit, insbesondere eine diodenbasierte Kopplungseinheit zur Unterdrückung störender Spannungsspitzen an den Zwischenkreis angeschlossen sein. Eine Kopplungseinheit sorgt dafür, dass Schaltverluste von den internen ZK-Kondensatoren und nicht von der Energiespeichereinrichtung abgedeckt werden können, da dies Vorteile bzgl. der EMV (Anforderungen an die elektromagnetische Verträglichkeit) sowie des Wirkungsgrads eröffnet. Dabei ermöglicht die Kopplungseinheit eine Entkopplung von Energiespeichereinrichtung und Zwischenkreis in einer Spannungshöhe von $V_f$, wobei eine Kopplung, d.h. ein Stromfluss nur bei einem Unterschied zwischen $V_{ZK}$ und Spannung der Energiespeichereinrichtung erfolgt, falls sich ein Spannungsunterschied größer $V_f$ einstellt. Durch eine diodenbasierte Kopplungseinheit wird die Energiespeichereinrichtung nicht durch Stromrippel belastet, solange die Zwischenkreisspannung nicht unter einen bauteilspezifischen Wert $V_f$ der Kopplungseinheit sinkt. Alternativ oder additiv umfasst die Kopplungseinheit eine Induktivitätsschaltung, um hochfrequente Störungen zu unterdrücken und den Strom zu glätten, so dass die Energiespeichereinrichtung sanft auf- und entladen werden kann. Auch kann eine Zenerdiodenschaltung oder eine vergleichbare Schaltung, beispielsweise eine oder mehrere Zenerdioden in Reihenschaltung zwischengeschaltet werden, deren Zenerspannung $V_Z$ z.B. der Spannung $V_f$ entsprechen kann. Bevorzugt ist eine Kombination der vorgenannten Bauteilelemente in einer passiven Kopplungseinheit umfasst.

Die Erfindung beruht auf einem Systemgedanken, der verschiedene Vorteile miteinander vereint. Eine vorteilhafte Pitchantriebsvorrichtung umfasst drei Kernkomponenten: Eine Synchronmaschine mit Permanentmagnetläufer, die vergrabene Magnete aufweist, und die als Pitchantriebsmotor dient, eine Wechselrichtereinheit als Servo Umrichter und letztlich eine Gleichspannungs-Energiespeichereinrichtung als Backup Energiespeicher, vorteilhafterweise bestehend aus hochkapazitiven Kondensatoren. Die Gleichspannungs-Energiespeichereinrichtung wird direkt an den Zwischenkreis zwischen Gleichrichter- und Wechselrichtereinheit gekoppelt, ohne dass beispielsweise aus dem Stand der Technik bekannte Entkopplungsdioden zum Einsatz kommen müssen. Dies bedeutet, dass das Spannungsniveau von Zwischenkreis $V_{ZK}$, Umrichtereinrichtung und Energiespeichereinrichtung nominal identisch ist.

Bei Ausfall einer Netzversorgung kann die Gleichspannungs-Energiespeichereinrichtung in der Regel das hohe Niveau der Zwischenkreisspannung von 560V DC nicht aufrechterhalten, so dass die Gleichspannung $V_{ZK}$ in Abhängigkeit vom Energieverbrauch des Pitchantriebs und der Speicherkapazität bis auf 100V absinken kann. In dieser Situation können konventionelle SPM-Synchronmotoren (Surface Permanent Magnet) nur unzureichend und in engen Grenzen drehzahlgeregelt werden, ihr Drehmoment bricht stark ein und die Gefahr eines Versagens des Pitchantriebs ist hoch.

Generell haben Synchronmotoren den Vorteil, dass das Stillstandsmoment ausschließlich vom zur Verfügung stehenden Motorstrom abhängt und keine Abhängigkeit von der zur Verfügung stehenden Spannung aufweist, wie z.B. bei Doppelschluss oder Asynchronmaschinen. Erfindungsgemäß ist der Synchronmotor ein IPM-Synchronmotor (Interior Permanent Magnets) mit innen vergrabenen Rotormagneten. Ein IPM-Synchronmotor weist eine hohe Reluktanz auf, so dass er ähnliche Eigenschaften wie ein Reluktanzmotor aufweist. Hierbei bringt die Reluktanzcharakteristik durch die vergrabenen Magneten zwei Vorteile mit sich: Die Spitzenleistung der Maschine bei geringer Zwischenkreisspannung ist größer als die von einer mit Oberflächenmagneten bestückten Maschine. Des Weiteren kann der Reluktanzeffekt der Maschine genutzt werden, um die Maschine bei geringen Drehzahlen mit großen Drehmomentreserven sensorlos zu regeln. Bei einem Ausfall des Drehgebers kann das Blatt somit weiterhin sicher in die Fahnenstellung verfahren.

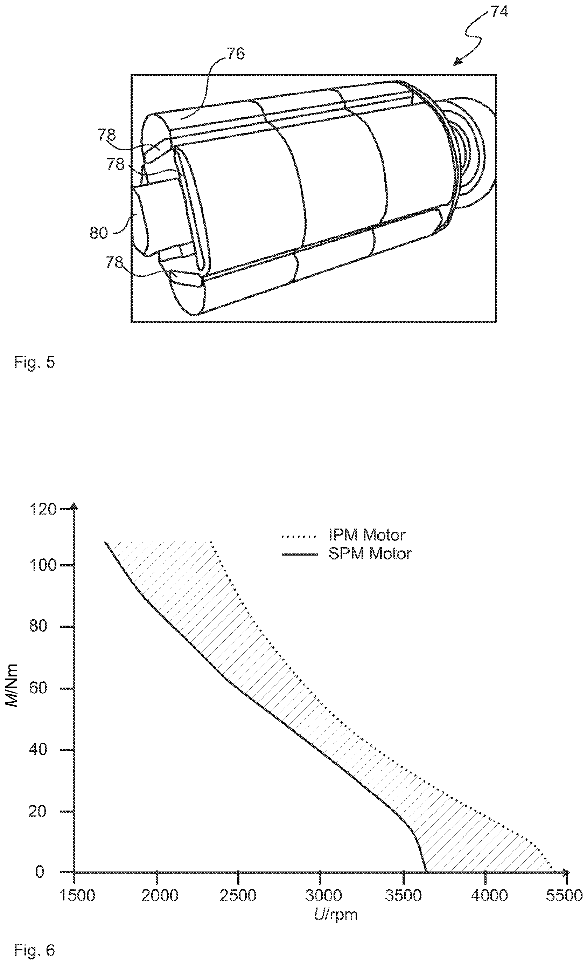

Dieser Vorteil wird durch folgende Eigenschaft des IPM-Motors ermöglicht: IPM-Synchronmotoren weißen einen deutlichen Unterschied zwischen der Längsinduktivität Ld und der Querinduktivität Lq auf, wobei in der Regel Lq>Ld gilt. Ld und der sie durchfließende Strom Id beschreiben die feldbildende Komponente des Magnetfelds und Lq sowie Iq die drehmomentbildende Komponente. Durch diesen Unterschied ist ein IPM-Motor, wie in der Fig. 6 dargestellt, hervorragend dafür geeignet, bei geringeren Drehzahlen und bei einer verringerten Spannung höhere Drehmomente bereitzustellen, sowie sensorlos geregelt zu werden.

Bei einer IPM-Konstruktion werden die Permanentmagnete in Aussparungen eines Läufers eingeschoben, wie in Fig. 5 dargestellt. Somit kann ein kleiner mechanischer Luftspalt erreicht werden, was zu einem größeren Einfluss auf den Induktivitätswert der Statorwicklung führt. Aufgrund der Permanentmagnetanordnung ist der effektive Luftspalt in Richtung der Rotorflussachse (d-Richtung) größer als der in q-Richtung, wodurch ein Absenken der Induktivität in d-Richtung im Vergleich zu der Induktivität in der q-Querachse auftritt. Diese Unsymmetrie der Maschine (Ld < Lq) bewirkt ein zusätzliches Reluktanzmoment und ermöglicht den vorgenannten Vorteil.

Die erfindungsgemäße Vorrichtung sowie die im Folgenden beschriebenen vorteilhaften Weiterbildungen und die bisherigen Systemmerkmale haben die folgende Zielsetzung:

• Erhöhung des Systemwirkungsgrads:

   ◦ Die beim Reversieren entstehende Energie wird nicht wie bisher durch einen Bremschopper (Bremswiderstand) in Wärme umgewandelt, sondern kann in der Energiespeichereinheit, bevorzugt in einer Kondensatoranordnung gespeichert werden.

   ◦ Durch die spezielle Charakteristik eines Synchronmotors, insbesondere eines IPM Synchronmotors (Integrated Permanent Magnets) kann die Stromaufnahme des Motors bei entsprechender Last minimiert werden.

   ◦ Durch die Begrenzung des Zwischenkreis- Eingangsstroms können notwendige Lastspitzen durch die gespeicherte Energie in der Energiespeichereinheit aufgenommen werden. Die maximale Belastung des Schleifrings und des Netzes sinkt. Leitungsverluste verringern sich, der Rotorschleifring wird geschützt.

   ◦ Durch eine konstruktionsbedingt geringes Trägheitsmoment des Synchronmotors können die Verluste beim Beschleunigen und Abbremsen des Antriebs reduziert werden.

• Erhöhung der Systemsicherheit:

   ◦ Durch die Möglichkeit einer sensorlosen Regelung des Synchronmotors zumindest im Notbetrieb selbst bei sehr kleinen Drehzahlen kann die Pitchantriebsvorrichtung bei Ausfall eines Drehgebers autark eine geregelte Fahrt in die sichere Fahnenstellung durchführen.

   ◦ Notwendige abtriebsseitige Leistungs-/ Drehmomentspitzen können auch beim Ausfall der netzseitigen Spannungsversorgung bereitgestellt werden.

   ◦ Falls es zu einem Ausfall der Energiespeichereinheit kommt, kann die Bremsfunktionalität dennoch durch eine vorteilhafte Not- Bremswiderstandseinheit sichergestellt werden. Eine geregelte Notfahrt in die Fahnenstellung kann weiterhin durchgeführt werden.

Zusammenfassend ermöglicht die Erfindung zumindest einen drehzahlgesteuerten Notbetrieb der Pitchantriebsvorrichtung bei einer sinkenden Zwischenkreisspannung $V_{ZK}$ mit hohem Drehmoment, wobei die Gleichspannungs-Energiespeichereinrichtung als Energiepuffer den Wirkungsgrad verbessert, und eine Stromübertragung über den Rotorschleifring vermindert.

Gemäß einer vorteilhaften Weiterbildung kann der IPM-Synchronmotor für einen hohen Drehzahlbereich von 300 bis 3000 U/Min ausgelegt sein, wobei ein optimaler Wirkungsgrad im unteren Drehzahlbereich, insbesondere im Bereich einer Nenndrehzahl von 500U/Min erreichbar sein sollte. Insbesondere bei einer Notfahrt kann eine hohe Drehzahl von 2500 U/Min oder mehr genutzt werden, um das Rotorblatt in kurzer Zeit in eine Fahnenstellung zu verfahren. Nutzt man das Reluktanzmoment eines IPM-Synchronmotors durch eine entsprechend modifizierte Regelung der Wechselrichtereinrichtung aus, so besitzt der IPM-Motor bei gleicher Zwischenkreisspannung einen größeren Drehmoment-Drehzahlbereich als ein vergleichbarer Synchronmotor mit an der Oberfläche angeordneten Magneten (SPM - Surface Permanent Magnet). Diese Eigenschaft eines großen Drehzahl-Drehmomentbereichs ist insbesondere für den Einsatz als Rotorblattantrieb vorteilhaft, da während der Notfahrt kurzzeitig große Leistungsreserven bereitgestellt werden müssen, d.h. Peak-Momente bei hohen Drehzahlen bereitgestellt werden müssen. Die durch einen IPM-Synchronmotors eröffnete Möglichkeit eines Feldschwächbetriebs ermöglicht, einen großen Drehmoment/Drehzahl Bereich auszunutzen, selbst wenn die Zwischenkreisspannung der Energiespeichereinrichtung, insbesondere einer Kondensatoranordnung auf einen geringen Wert (bis auf 100-200V DC) abgesunken ist. Durch die Ausnutzbarkeit eines großen Spannungsbereichs kann die Speicherkapazität der Energiespeichereinrichtung geringer als bei Einsatz eines herkömmlichen Pitchantriebsmotors bemessen werden. Zum Anderen ergibt sich die Möglichkeit, den IPM-Synchronmotor mit einem sehr großen Drehmoment auszulegen. Eine große Drehmomentkonstante bedeutet, dass der IPM-Synchronmotor eine große Drehmomentausbeute bei gegebenem Stromfluss ermöglicht. Bisher war die Größe dieser Konstante begrenzt, da eine Erhöhung der Drehmomentkonstante die maximale Drehzahl direkt beeinflusst. Vergrößert man beispielsweise bei einem Standard-SPM-Synchronmotor (Surface Permanent Magnet) die Drehmomentkonstante um 40%, so sinkt die maximal mögliche Drehzahl um ca. 40% aufgrund der größeren induzierten Spannung. Bei dem vorgeschlagenen Einsatz eines IPM-Motors stammen jedoch bis zu 30% des Drehmoments aus dem sog. Reluktanzmoment, welches keinen Einfluss auf die induzierte Spannung hat. Möchte man die Drehmomentkonstante wie im obigen Beispiel um beispielsweise 40% erhöhen, so verringert sich die maximale Drehzahl lediglich um 28%. Hierdurch wird deutlich dass durch den Einsatz des IPM-Motors die Stromaufnahme bei entsprechendem Moment minimiert werden kann und dass ein Erreichen ge-

wünschter Leistungszielwerte ($M_{max}$ @ $N_{max}$) gewährleistet wird.

Gemäß einer vorteilhaften Weiterbildung kann die Gleichspannungs-Energiespeichereinrichtung eine hochkapazitive Kondensatoranordnung sein. Die Kondensatoranordnung kann im wesentlichen direkt an den Zwischenkreis angeschlossen sein, so dass an den Kondensatoren die vollständige Zwischenkreisspannung anliegt. Während einer Verstellung eines Rotorblatts kommt es typischerweise zu ständigen Reversiervorgängen, d.h. zu häufigen Drehrichtungsumkehrvorgängen am Synchronmotoren, wodurch Spannungsspitzen und zurückgespeiste regenerative Energie bzw. Bremsenergie erzeugt werden. Eine hochkapazitive Kondensatoranordnung ist in der Lage, die regenerative Energie bzw. Spannungsspitzen aufzunehmen, so dass sie nicht wie bisher durch einen Bremswiderstand eliminiert und in Wärme umgewandelt werden muss. Dies erhöht den Wirkungsgrad des Systems und dient zur Energieminimierung. Des Weiteren stehen die Kondensatoren für kurzzeitige Leistungspeaks des Rotorblattantriebs zur Verfügung, minimieren somit den Stromfluss aus dem Netz und entlasten folglich den Systemschleifring, der Energie von der feststehenden Gondel in die bewegte Rotorachse überträgt.

In diesem Zusammenhang kann gemäß einer vorteilhaften Weiterbildung die Gleichspannungs-Energiespeichereinrichtung für eine Zwischenkreisspannung $V_{ZK}$ von 100V DC bis 600V DC ausgelegt sein. Die elektrischen Energiespeichereinrichtung hat in der Pitchantriebsvorrichtung die folgenden Aufgaben:

1. Bereitstellen der Energie, um bei einem Ausfall der netzseitigen Versorgung eine wechselrichtergeregelte Notfahrt durchzuführen (Zeitbereich bis zu 20s);

2. Liefern von kurzeitigen Leistungsspitzen (Zeitbereich über 4s, zumindest 3s);

3. Speichern der gesamten Energie, die beim Abbremsen des Pitchantriebs auftritt. (Reversiervorgang).

Bisher wurden bekannte Energiespeichereinrichtungen, bevorzugt Kondensatoranordnungen nur für lediglich die unter 1. genannten Aufgabe ausgelegt. Dabei handelte es sich ausschließlich um passive Energiespeicher, d.h. Batterien oder Akkus, die lediglich während der Notfahrt aktiv wurden, um der unter 1. genannten Aufgabe gerecht zu werden. Das Spannungsniveau dieser bekannten Energiespeichereinrichtungen liegt in der Regel unter dem nominalen Zwischenkreisniveau von ca. 560V DC und sie werden daher durch eine Entkopplungsdiode vor einer ungewollten Aufladung durch den Zwischenkreis geschützt, und oftmals im Notbetrieb erst an den Zwischenkreis angeschaltet. Des weiteren ist für die bekannte Energiespeichereinrichtung meist eine separate Ladeeinheit für die Auf- und Erhaltungsladung der Backup Akkuanordnung notwendig.

Daneben existieren Energiespeichereinrichtungen, bei denen eine Direktankopplung der Kondensatoranordnung an den Zwischenkreis vorgenommen wird, um die unter 2. und 3. genannten Aufgaben zu übernehmen, diese erfüllen allerdings nicht die unter 1. genannte Aufgabe. Dabei werden die Kondensatoranordnungen explizit auf eine reduzierte Zwischenkreisspannung von ca. 100V ausgelegt.

Als besondere Merkmale der vorteilhaften Energiespeichereinrichtung, insbesondere der vorgeschlagenen Kondensatoranordnung im Vergleich zum bisherigen Stand der Technik sind folgende zu nennen:

• Die nominale Spannung der Energiespeichereinrichtung liegt bei der gängigen Zwischenkreisspannung $V_{ZK}$, insbesondere bei ca. 560V;

• Die Energiespeichereinrichtung wird quasi- direkt mit dem Zwischenkreis verbunden;

• Regenerative Energie wird hauptsächlich von der Energiespeichereinrichtung aufgenommen. Die Zwischenkreisspannung erhöht sich entsprechend, auf einen Bremswiderstand kann verzichtet werden;

• Bei Ausfall der netzseitigen Spannungsversorgung kann die Energiespeichereinrichtungsspannung und damit auch die Zwischenkreisspannung von zunächst 560VDC auf bis zu 150V DC sinken;

• Das Zulassen dieses Spannungsabfalls während der Notfahrt bedeutet, dass die Kapazität der Kondensatoranordnung minimiert werden kann, da bei höheren Spannungen mehr Energie in geringere Kapazitäten gespeichert werden kann. Verglichen mit der bisherigen "Niedrigspannungs" -Auslegung kann die Kapazität der Kondensatoranordnung um bis zu 50-fach geringer ausfallen, wodurch eine sehr hohe Kostenersparnis erreicht werden kann. Eine reduzierte Kapazitätsanforderung ermöglicht den Einsatz alternativer kostengünstiger Kondensator-Technologien für die Kondensatoranordnung und führt zu einer Reduzierung der Kosten für die Pitchantriebsvorrichtung.

Gemäß einer vorteilhaften Weiterbildung kann die Kopplungseinheit zur Kapazitätserhöhung einer Zwischenkreiskapazität mindestens eine weitere Zwischenkreiskapazität umfassen. So kann die Kopplungseinheit bevorzugt durch weitere Zwischenkreiskapazitäten, die zwischen die DC-Leitungen des Zwischenkreises geschaltet sind, erweitert werden, wodurch die interne Zwischenkreiskapazität durch entsprechend geeignete Kondensatoren erweiterbar ist, um Spannungsschwankung des Zwischenkreises weiter zu verringern.

Gemäß einer vorteilhaften Weiterbildung kann die Kopplungseinheit ein Steuermittel und ein Schaltmittel umfassen, wodurch zumindest ein Ladestrom $I_G$ von Gleichspannungs-Zwischenkreis zum Gleichspannungs-Speichereinrichtung schaltbar ist. Die Kopplungseinheit dieser Weiterentwicklung umfasst aktive Bauelemente, die in jeder möglichen Kombination mit den vorgenannten passiven Bauelementen verschaltet sein können und die zumindest den Ladestrom $I_G$ schalten können. Das Schaltmittel kann ein elektromechanisches Schaltmittel wie Schütz oder Relais sein, oder ein elektronisches Halbleiterschaltmittel wie IGBT (Insolated Gate Bipolar Transistor), Power-FET oder Ähnliches. Das Steuermittel kann eine elektronische Steuerschaltung, FPGA, Mikrocontroller oder ähnliches sein. Das Steuermittel kann Schaltbefehle von einer externen Überwachungs- und Steuereinrichtung erhalten und beispielsweise im Notfall, bei absinkender Zwischenkreisspannung, beim Anfahren des Antriebsmotors, Netzausfall, Defekt an Gleichrichtereinrichtung oder ähnliches das Schaltmittel aktivieren, d.h. Einschalten, und z.B. bei Normalbetrieb oder während besonderer Lastbereiche des IPM-Motors, in denen hohe Stromimpulse im Zwischenkreis auftreten, das Schaltmittel deaktivieren. Eine gesteuerte Aufladung der Energiespeichervorrichtung und/oder eine gesteuerte Aufnahme von regenerativer Energie des Zwischenkreises ist durch gezielte Aktivierung des Schaltmittels möglich. Das Steuermittel kann grundsätzlich auf zwei verschiedenen Möglichkeiten das Schaltmittel aktivieren: Zum einen durch ein Regelverfahren, beispielsweise einem geschlossenen Regelkreis zur Regelung des Aufladestromes $I_G$ mittels PWM- ähnlicher Regelkonzepte oder ähnlichem, Zum anderen durch eine statische Aktivierung/Deaktivierung des Schaltmittels auf Basis von externen Steuersignalen, beispielsweise von einer übergeordneten Pitch-Motorsteuereinrichtung. Mittels des erstgenannten Regelverfahrens (Regelung auf konstanten Strom oder konstante Spannung des Zwischenkreises) kann eine Ladungssteuerung der

Energiespeichereinrichtung ermöglicht werden. Im Rahmen der zweitgenannten Möglichkeit kann das Schaltmittel aktiviert, d.h. geschlossen werden, sobald regenerative Energie vom Energiespeicher zurück in den Zwischenkreis fließt.

Die Steuerung des Schaltmittels kann ähnlich wie bei einer konventionellen Steuerung eines Chopper-IGBTs in einem Wechselrichter erfolgen. Somit kann regenerative Energie im Energiespeicher gespeichert und nach Beendigung der regenerativen Phase (z.B. des generatorischen Antriebs des IPM-Motors) kann die Energie zurück an den Motor geliefert werden. Das Schaltmittel kann während des Anfahrens des Wechselrichters aktiviert sein. Das Schaltmittel kann somit ein strombegrenztes Anfahrens des Motors durch eine Vorladung des Zwischenkreises ermöglichen und unterstützen. Während des Vorladevorgangs kann das Schaltmittel geschlossen und im Normalbetrieb der Energiespeicher wieder aufgeladen werden. Somit kann eine schaltbare Kopplung bzw. Entkopplung von Energiespeichereinrichtung und Zwischenkreis erreicht werden, so dass die Energiespeichereinrichtung vor Stromspitzen, die während des Motorbetriebes auftreten, geschützt bleibt. Dies ermöglicht eine erhöhte Lebensdauer der Energiespeichereinrichtung und eine verbesserte Notlauffähigkeit.

Gemäß einer vorteilhaften Weiterbildung kann dem Schaltmittel ein Überbrückungszweig, der eine Kopplungsdiode zur Versorgung des Gleichspannungs-Zwischenkreises mit einem Versorgungsstrom $I_M$ umfasst, parallelgeschaltet sein, so dass ein Versorgungsstrom $I_M$ unabhängig vom Schaltzustand des Schaltmittels fließen kann. Somit kann, sofern die Spannung des Zwischenkreises $V_{ZK}$ kleiner als die der Energiespeichereinrichtung $V_B$ ist, ohne Aktivierung des Schaltmittels eine Versorgung des Zwischenkreises mit Energie der Energiespeichereinrichtung rein passiv erfolgen, so dass die Betriebssicherheit und Notlauffähigkeit der Gesamtvorrichtung ohne aktiven Eingriff erhöht wird. Das Steuermittel kann eine Aufladung der Energiespeichereinrichtung durch Steuerung des Stromes $I_G$ aktiv steuern, die Notversorgung des Zwischenkreises erfolgt unabhängig von der Schaltstellung des Schaltmittels.

Gemäß einer vorteilhaften Weiterbildung kann zumindest das Schaltmittel ein Halbleiter-Schaltmittel sein und in einem Gehäuse eines Halbleiter-Leistungsmodul zusammen mit Halbleiter-Schaltmitteln der Wechselrichtereinrichtung und/oder Halbleiter-Brückendioden der Gleichrichtereinrichtung, bevorzugt in einem IPM-Gehäuse (Integrated Power Modul) integriert sein. Konventionelle IPMs, insbesondere DIP-IPMs (Dual Inline Package IPMs) umfassen neben Leistungs-Halbleiterbauelemente für Wechselrichtereinrichtung und/oder Gleichrichtereinrichtung auch einzelne Halbleiter-Schaltmittel z.B. für einen Bremschopper, wobei diese Halbleiter-Schaltmittel zumindest teilweise als Halbleiter-Schaltmittel für eine aktive Kopplungseinheit genutzt werden können. Somit kann ein kompakter und günstiger Aufbau erreicht werden.

Gemäß einer vorteilhaften Weiterbildung kann die Wechselrichtereinrichtung eine feldorientierte Vektorregelungseinheit zur sensorlosen Drehzahlregelung des Synchronmotors umfassen, die zumindest in einem Betriebsmode und bevorzugt in einem niedrigen Drehzahlbereich des Synchronmotors von 300 bis 700 U/Min, insbesondere bei einer Nenndrehzahl von 500U/Min eine Drehzahlregelung vornehmen kann. Allerdings soll gewährleistet sein, dass im Notbetrieb eine Schnellverstellung mit einer hohen Drehzahl von über 1500 U/Min, insbesondere im Bereich von 2500U/Min sensorlos erreicht werden kann. Eine Vektorregelungseinheit kann insbesondere bei Ausfall einer sensorbasierten Regelung, beispielsweise bei Ausfall eines Drehzahl- oder Drehwinkelsensors eine Drehzahlregelung des IPM-Motors übernehmen. Grundsätzlich kann die sensorlose Drehzahlregelung in allen Betriebsmoden, d.h. im ungestörten Normalbetrieb, im Fall des Auftretens von Fehlern (Fehlerbetrieb) oder in einem Notbetrieb die Regelung des Synchronmotors durchführen. Bevorzugt wird die sensorlose Regelung zumindest in einem Fehlerbetrieb, bei dem beispielsweise ein oder mehrere Drehzahl- oder Drehwinkelsensoren einer sensorgestützten Regelung ausfallen, zumindest eine Netzphase ausfällt, oder bei Umschaltung zwischen Netz- und Eigenversorgungsbetrieb etc. verwendet werden. Des Weiteren kann die sensorlose Regelung vorteilhaft in einem Notbetrieb bei hoher Windlast, Ausfall der Spannungsversorgung etc. eine Schnellverstellung des Rotorblatts in eine Fahnenstellung regeln.

Allgemein versteht man unter einer Vektorregelung ein Bewegen des Raumzeigers (*engl.* space vector), welcher mit der Motorwelle rotiert. Sie basiert im Allgemeinen auf Rückkopplung einer Regelschleife von dem Motor sowie aufeinanderfolgende Transformation der gemessenen Statorströme. Durch eine sogenannte d/q-Transformation wird bei der Vektorregelung das Drehmoment nur über die q-Komponente des Statorstromes geregelt und die d-Komponente geht bei der permanentmagnet-erregten Drehstrom-Synchronmaschine gegen Null. Sind Statorfluss und Statorstrom im rotierenden D-Q-Feld (durch d/q-Transformation aus dem 3-phasen System) beim Synchronmotor parallel, so ist das Drehmoment gleich Null. Bei einem rechtwinklig stehendem Raumvektor entsteht hingegen ein maximales Drehmoment. In diesem Fall stehen der Erregerfluß und die Ankerdurchflutung senkrecht aufeinander, ähnlich wie bei der Gleichstrommaschine. Dies ist daher der angestrebte Zustand der Regelung. Herkömmlicherweise wird zur Ausregelung des Raumvektors im rechten Winkel ein Regelkreis mit Rückkopplung gefordert welcher die Lage des Polrades angibt. Diese Rückkopplung wurde meist durch Drehzahlsensoren, bzw. Encoder (Resolver, optische Inkremental- und Absolutwertsensoren oder induktive Sensoren) vorgenommen. Die vorgeschlagene sensorlose Regelung kann bei Blockkommutierung (PWM-Motoransteuerung) durch das Zurückmessen der im Motor induzierten Gegenspannung realisiert werden. Diese Rückkopplung hat bei herkömmlichen SPM-Motoren insbesondere bei kleinen Geschwindigkeiten zunehmende Nachteile, kann jedoch insbesondere bei IPM-Motoren sehr vorteilhaft eingesetzt werden, wie im folgenden erläutert:

Die Wechselrichtereinrichtung kann über eine angepasste Regelungssoftware eines die Reversiervorgänge (Drehrichtungsumkehr) regelnden Mikrocontrollers verfügen, die es einerseits erlaubt, den Synchronmotor, bevorzugt IPM-Synchronmotor sensorlos zu regeln, als auch das Reluktanzmoment während des Normalbetriebs auszunutzen, um den Wirkungsgrad des Motors zu erhöhen. Zudem kann die Vektorregelungseinheit in der Lage sein, die während der Notfahrt von über 500V, insbesondere 560V auf unter 300V, insbesondere 200V absinkende Spannung durch eine entsprechende Feldschwächung zu kompensieren, um abtriebsseitig weiterhin die notwendige Spitzenleistung zur Verfügung zu stellen. Ein Synchronmotor, insbesondere ein IPM-Synchronmotor hat naturgemäß unterschiedlich große Induktivitäten Ld und Lq und besitzt ein sogenanntes Reluktanzmoment. Die unterschiedlichen Induktivitäten können genutzt werden, um den Motor selbst bei kleinen Drehzahlen sensorlos zu betreiben. Bei traditionellen Maschinentypen ist dies lediglich für große Drehzahlen möglich. Hierbei wird dem Sollstrom ein sinusförmiger Injektionsstrom überlagert, durch dessen Messung ein im Antrieb berechneter regelungstechnischer Beobachter in der Lage ist, die aktuelle Drehzahl zu schätzen. Für die beschriebene Art der sensorlosen Regelung ist der hier beschriebene IPM-Synchronmotor besonders gut geeignet. Die zum Einsatz kommende, in einer Software der Wechselrichtereinrichtung implementierte Motorregelung kann vorteilhafterweise folgende Eigenschaften aufweisen:

Im Allgemeinen existieren zwei Möglichkeiten das Moment eines elektrischen Motors zu beeinflussen:

- Magnetischer Fluß

- Drehmomentbildender Motorstrom Iq.

Bei der Regelung von AC Motoren besteht ein direkter Zusammenhang zwischen dem magnetischen Fluss und dem sogen. d- Strom- Id, sowie dem drehmomentbildender Strom- Iq. Die Gesamtstromaufnahme der Maschine ergibt sich wie folgt:

$$I_{abs} = \sqrt{I_d{}^2 + I_q{}^2}$$

Diesen Strombetrag in Abhängigkeit vom aktuellen Arbeitspunkt des Motors ($M_{act}$, $n_{act}$) (Drehmoment, Drehzahl) zu minimieren ist die Aufgabe einer verlustoptimalen Regelung. Bei der Regelung eines bevorzugten IPM Synchronmotors ist diese Art der Regelung durch ihre konstruktionsbedingten Eigenschaften besonders vorteilhaft. Dazu ist die ausgezeichnete Möglichkeit eines Feldschwächbetriebs eines IPM-Synchronmotors gerade in der hier beschriebenen Anwendung notwendig. Die während der Notfahrt angeforderte Drehzahl ist zwei- bis dreifach größer als die durchschnittliche Drehzahl während des Betriebs. Aus diesem Grund sollte der Motor insbesondere für kleine Drehzahlen ausgelegt sein, muss jedoch kurzzeitig in der Lage sein (zumindest mehr als 10s, bevorzugt mindestens 20s) auch bei der zwei- bis vierfachen Geschwindigkeit, bevorzugt dreifachen Geschwindigkeit betrieben zu werden, um eine schnelle Notfahrt durchführen zu können. Für diese Anforderungen ist ein IPM-Motor konstruktionsbedingt hervorragend geeignet, da er eine robuste Befestigung der vergrabenen Magneten aufweist, und somit hohe Schleuderdrehzahlen ermöglicht, und der magnetische Kreis robust gegen Entmagnetisierungserscheinungen sowohl im Feldschwächbetrieb als auch Überlastbereich ist. Durch einen großen Unterschied zwischen q- und d-Induktivität kann eine sensorlose Regelung des Motors auch bei kleinen Drehzahlen durchgeführt werden. Hierzu wird im Bereich kleiner Drehzahlen dem Motorstrom ein sogenanntes Injektionssignal aufgeprägt, durch das ein regelungstechnischer Beobachter die aktuelle Rotorposition aufgrund der konstruktionsbedingten magnetischen Unsymetrie detektieren kann. Durch die Möglichkeit einer sensorlosen Regelung kann der Pitchantrieb selbst bei einem Ausfall eines Drehzahlsensors zumindest in einer Notfahrt geregelt werden und unter vollen Lasteinfluss in die sogenannte Fahnenstellung verfahren.

Gemäß einer vorteilhaften Weiterbildung und anschließend an das vorangegangene Ausführungsbeispiel kann die Wechselrichtereinrichtung eine herkömmliche Sensorregeleinheit umfassen, die mit einem oder mehreren mechanischen Drehzahlsensoren (Encodern) zur Drehzahlregelung des Synchronmotors verbunden ist, und eine Regelungsumschalteinheit umfassen, die zwischen der Sensorregeleinheit für eine Drehzahlregelung im Normalbetrieb und der Vektorregelungseinheit für eine Drehzahlregelung im Notbetrieb umschalten kann. Die Sensorregeleinheit regelt die PWM-Schaltvorgänge der Wechselrichtereinrichtung nach gemessenen Drehzahlen des Drehzahlsensors, und kann als zusätzliche Pitchregeleinheit eine Ansteuerung des Synchronmotors bevorzugt in einem Normalbetrieb übernehmen. Die Regelungsumschalteinheit kann die Umschaltung der Motorregelung zwischen herkömmlicher, im Normalbetrieb aktiver Sensorregeleinheit und Vektorregelungseinheit autark bzw. auf Anforderung durchführen. Dies bedeutet, sollte es während des Normalbetriebs zu einem Ausfall eines Sensors kommen, so wird dieser Ausfall an die übergeordnete Regelung, d.h. Regelungsumschalteinheit gemeldet und es erfolgt eine automatische Umschaltung in einen sensorlosen Betrieb.

Gemäß einer vorteilhaften Weiterbildung kann die Gleichrichtereinrichtung eine Stromsteuerungseinheit zur Begrenzung des aufgenommenen Netzstromes und/oder zur stromgeregelten Auflading der Gleichspannungs-Energiespeichereinrichtung der Zwischenkreiskapazität und der Wechselrichtereinrichtung umfassen, wobei die Stromsteuerungseinheit im Normalbetrieb die Zwischenkreisspannung $V_{ZK}$ auf einen voreinstellbaren Wert regeln kann. Eine vollgesteuerte Eingangsbrücke der Gleichrichtereinrichtung kann dafür sorgen, dass der Eingangsstrom insbesondere bei entladener Gleichspannungs-Energiespeichereinrichtung auf einen maximal zulässigen Wert begrenzt werden kann, wobei bei der Auflading der Energiespeichereinrichtung der Stromfluss begrenzt werden kann, um einen Überlastfall zu verhindern. Die Stromsteuerungseinheit kann folgende Funktionen und Aufgaben erfüllen:

- Stromgeregeltes Aufladen des gesamten Zwischenkreises (Wechselrichter, DC-Zwischenkreis und Energiespeichereinrichtung) auf eine nominale Zwischenkreisspannung $V_{ZK}$ von insbesondere 560V;

- Begrenzen der maximalen Stromaufnahme aus dem Netz auf einen einstellbaren Wert: $I_{max} = K_2 \cdot I_{Nom}$ mit $K_2 = 1...2$;

- Die Zwischenkreisspannung $V_{ZK}$ kann mithilfe der Vorladungsschaltung auf einen einstellbaren Wert geregelt werden;

- Kommt es zu einer Überlastung der Stromsteuerungseinheit kann kurzzeitig eine vorteilhafte Not-Bremswiderstandseinheit aktiviert werden.

Gemäß einer vorteilhaften Weiterbildung kann am Gleichspannungs-Zwischenkreis eine Not-Bremswiderstandseinheit zur Ableitung von elektrischer Energie für eine Schnellbremsung des Synchronmotors zuschaltbar angeschlossen sein, wobei die Bremswiderstandseinheit insbesondere im Falle einer erhöhten Zwischenkreisspannung $V_{ZK}$ zugeschaltet werden kann. Hierdurch kann bei einer fehlerhaften Energiespeichereinrichtung bzw. einem Fehler in einer Stromsteuerungseinheit weiterhin eine netzgestützte Notfahrt incl. Abbremsvorgang durchgeführt werden.

## ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 ein erstes Ausführungsbeispiel einer erfindungsgemäßen Pitchantriebsvorrichtung;

Fig. 2 ein zweites Ausführungsbeispiel einer erfindungsgemäßen Pitchantriebsvorrichtung;

Fig. 3 eine erste bis vierte Kopplungseinheit eines Ausführungsbeispiel einer erfindungsgemäßen Pitchantriebsvorrichtung;

Fig. 4 eine aktive Kopplungseinheit eines Ausführungsbeispiel einer erfindungsgemäßen Pitchantriebsvorrichtung;

Fig. 5 eine Prinzipskizze eines Rotoraufbaus eines IPM-Synchronmotors für ein Ausführungsbeispiel einer erfindungsgemäßen Pitchantriebsvorrichtung;

Fig. 6 ein Drehmoment/Drehzahl-Unterschiedsdiagramm zwischen vergleichbaren IPM/SPM-Synchronmotoren.

AUSFÜHRUNGSFORMEN DER ERFINDUNG

In den Figuren sind gleiche oder gleichartige Komponenten mit gleichen Bezugzeichen beziffert. Die folgenden Schaltbilder dienen einer schematischen Veranschaulichung, so bedeutet beispielsweise eine Verbindungslinie eine elektrische Verbindung zweier elektrischer Einrichtungen und umfasst in der Regel mindestens eine Hin- und eine Rückleitung. Schaltsymbole stehen nicht nur für einzelne Bauteile, sondern auch für eine Schaltungsgruppe, die ein oder mehrere Bauteile umfassen kann.

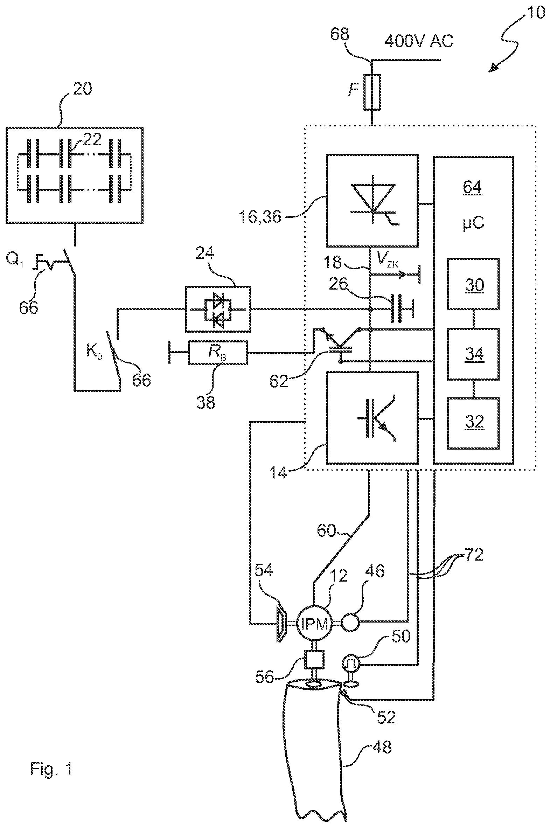

Fig. 1 stellt ein erstes Ausführungsbeispiel einer erfindungsgemäßen Pitchantriebsvorrichtung 10 schematisch dar. Die Pitchantriebsvorrichtung 10 umfasst einen Synchronmotor 12, der als IPM-Motor ausgelegt ist, sowie eine Gleichspannungs-Energiespeichereinrichtung 20 und eine Wechselrichtereinrichtung 14, die mittels einer Motorregelungseinrichtung 64 den Motor 12 über eine PWM-Motoransteuerleitung (Pulse Width Modulation) 60 ansteuert, um eine gewünschte Rotorblattverstellung eines Rotorblatts 48 einzustellen. Der Pitchmotor 12 ist über ein Pitchgetriebe 56 zur Drehzahlumsetzung an den gelagerten Wurzelpunkt des Rotorblatts 48 gekoppelt, wobei ein geregelter Betrieb des Pitchmotors 12 den Anstellwinkel (Pitch) des Rotorblatts 48 einer Wind- oder Wasserkraftanlage verändern kann. Zur Bestimmung der Drehlage des Motors 12 sind ein Drehzahlsensor 46, ein Drehwinkelsensor 50 sowie ein Endpositionssensor 52, der eine Endanschlagsposition des Rotorblatts 48 anzeigen kann, über eine oder mehrere Sensorleitungen 72, bevorzugt über einen Sensorbus mit der Motorregelungseinrichtung 64 verbunden, wodurch eine von der Motorregelungseinrichtung 64 umfasste Sensorregelungseinheit 32 Drehzahl und Drehwinkel des Motors 12 empfangen kann. Die Motorregelungseinrichtung 64 kann mittels der Sensordaten eine phasenrichtige Ansteuerung eines in der Wechselrichtereinrichtung 14 umfassten Wechselrichters vornehmen, um eine gewünschte Drehrichtung und Drehzahl des Motors 12 einzustellen. Der Motor 12 kann des Weiteren mittels einer Bremse 54 abgebremst werden, die Bremse 54 wird wiederum von der Motorregelungseinrichtung 64 betätigt.

Im Normalbetrieb wird elektrische Energie über ein Versorgungsnetz 64 bezogen, wobei eine Vorschaltsicherung F die Pitchantriebsvorrichtung 10 vor Überspannung schützt. Die Versorgungsspannung wird über einen Systemschleifring einer feststehenden Gondel einer Windkraftanlage auf die drehende Rotorachse übertragen. Innerhalb der Pitchantriebsvorrichtung 10 wird der netzseitige 400V Dreiphasen-Wechselstrom mittels einer Gleichrichtereinrichtung 16 in eine Gleichspannung des Zwischenkreises 18 gleichgerichtet, die in der Regel $V_{ZK}$=560V (400V*1.41) beträgt. Die Gleichrichtereinrichtung 16 umfasst des Weiteren eine Stromsteuerungseinheit 36, die den Stromfluss überwacht und limitiert, so dass bei einem Anfahren der Pitchantriebsvorrichtung 10 ein reduzierter Strom insbesondere zum Aufladen der Energiespeichereinrichtung 20 und zur Herstellung einer gewünschten Zwischenkreisspannung $V_{ZK}$ fließt. Am Zwischenkreis 18 ist eine Zwischenkreiskapaziät 26 zur Glättung der gleichgerichteten Spannung $V_{ZK}$ der Gleichrichtereinrichtung 16 sowie zur Ableitung von Spannungsspitzen, die durch die hochfrequenten Schaltvorgänge der Wechselrichtereinrichtung 14 verursacht werden, zwischen die Potentialleiter des Zwischenkreises 18 eingeschaltet. Des Weiteren ist am Zwischenkreis 18 eine Bremswiderstandseinheit 38 schaltbar über ein Bremsenschaltelement 62, das ein Halbleiterschaltelement sein kann, angeschlossen. Die Motorregelungseinrichtung 64 kann durch Betätigung des Bremsenschaltelements 62 Strom aus dem Zwischenkreis 18 in die Bremsenwiderstandseinheit 38 leiten, wodurch der Zwischenkreis 18 energiefrei und somit der Pitchmotor 12 elektrisch gebremst werden kann.

Zumindest im Notbetrieb kann eine Gleichspannungs-Energiespeichereinrichtung 20 über einen Schützkontakt $K_0$ und eine Kopplungseinheit 24 an den Zwischenkreis 18 unmittelbar angeschlossen werden. Der Schützkontakt $K_0$ und der manuell zu betätigende Schalter $Q_1$ dienen als Energiespeicherschalteinrichtungen 66, die beispielsweise im Reparatur- und Wartungsfall eine elektrische Trennung von Energiespeichereinrichtung 20 vom Zwischenkreis 18 ermöglichen. Die Energiespeichereinrichtung 20 umfasst eine Reihen- und Parallelschaltung von Kondensatoren zu einer hochkapazitiven Kondensatoranordnung 22, die in der Lage ist, auf dem Potentialniveau $V_{ZK}$ des Zwischenkreises 18 Energie zu speichern, wobei im Notbetrieb die gespeicherte elektrische Energie kurzfristig in den Zwischenkreis 18 gespeist werden kann, um zumindest eine Notfahrt des Motors 12 zu ermöglichen. Die Energiespeichereinrichtung 20 ist über eine Kopplungseinheit 24 an den Zwischenkreis 18 gekoppelt, wobei die Kopplungseinheit 24 die Aufgabe hat, bei geringfügigen Spannungsschwankungen zwischen Zwischenkreisspannung $V_{ZK}$ und Spannung der Energiespeichereinrichtung 20 einen Stromfluss zu unterdrücken, um die Energiespeichereinrichtung 20 zu schonen, wobei Spannungsschwankungen von der Zwischenkreiskapazität 26 aufgenommen werden können. Somit dient die Kopplungseinheit 24 zur definierten Aufgabenverteilung zwischen Energiespeichereinrichtung 20 und Zwischenkreiskapazität 24.

Die Motorregelungseinrichtung 64 umfasst des Weiteren eine Regelungsumschalteinheit 34, die beim Übergang von einem Normal- in einen Notbetrieb zwischen der Sensorregelungseinheit 32 und einer feldorientierten Vektorregelungseinheit 30 umschalten kann. Die feldorientierte Vektorregelungseinheit 30 nimmt eine sensorlose Regelung des IPM-Motors 12 auf Basis gemessener Motorströme vor, wobei die charakteristische Auslegung des IPM-Motors insbesondere in niedrigen Drehzahlbereichen eine präzise Regelung des Antriebsverhaltens des Pitchantriebs ermöglicht.

In einem Notbetrieb, beispielsweise bei Ausfall des Versorgungsnetzes 68, Ausfall der Gleichrichtereinrichtung 16, Ausfall eines Drehzahlsensors 46, Drehwinkelsensors 50, Endpositionsensors 52, etc. schaltet die Regelungsumschalteinheit 34 der Motorregelungseinrichtung 64 von einer Sensorregelungseinrichtung 32 auf eine Vektorregelungseinheit 30 um, die eine Regelung der Drehzahl des IPM-Motors 12 auf Basis gemessener Injektionsströme vornimmt. In diesem Fall wird Energie aus der Energiespeichereinrichtung 20 in den Zwischenkreis 18 geleitet, wobei die Spannung $V_{ZK}$ des Zwischenkreises 18 auf unter 200 V absinken kann. Aufgrund der IPM-Charakteristik des Motors 12 kann selbst bei einer verminderten Zwischenkreisspannung $V_{ZK}$ und bei niedrigen Drehzahlen eine feldorientierte PWM-Ansteuerung durchgeführt werden, so dass zumindest eine Fahnenstellung des Rotorblatts 48 eingenommen werden kann.

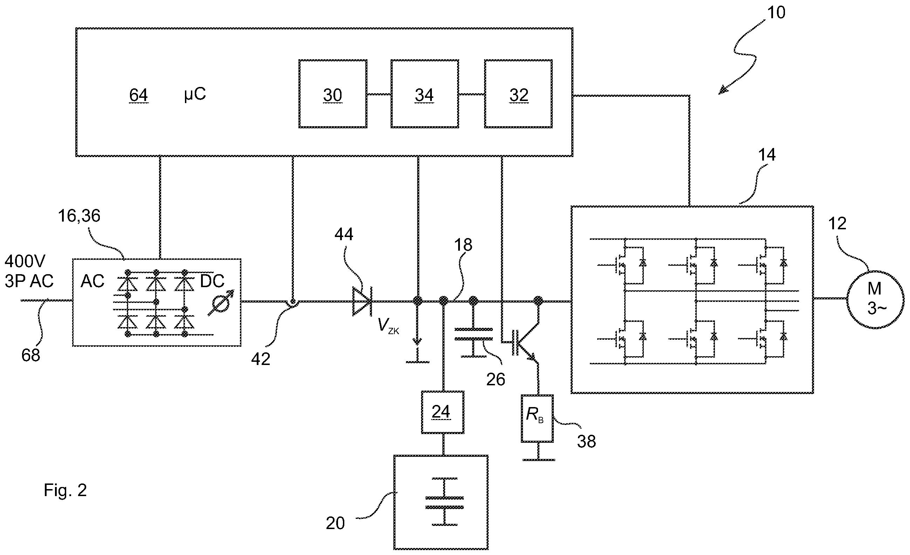

In der Fig. 2 ist ein weiteres Ausführungsbeispiel einer erfindungsgemäßen Pitchantriebsvorrichtung 10 dargestellt. Im Wesentlichen entspricht die in Fig. 2 dargestellte Pitchantriebsvorrichtung 10 der in Fig. 1 dargestellten Ausführungsform, so dass weitgehend auf die Beschreibung der einzelnen Bauteile verzichtet wird. Die Gleichrichtereinrichtung 16 umfasst einen Dreiphasen-Brückengleichrichter, um aus der dreiphasigen Netzspannung des Versorgungsnetzes 68 die Gleichspannungs-Zwischenkreisspannung $V_{ZK}$ des Zwischenkreises 18 gleichzurichten. In dem Zwischenkreis 18 ist eine oder mehrere Stromführungsdioden 44 eingeschaltet, um einen Stromrückfluss von Wechselrichtereinrichtung 14 zurück zu der Gleichrichtereinrichtung 16 zu verhindern, so dass auftretende Spannungsspitzen lediglich von der Zwischenkreiskapazität 26 aufgenommen werden. Die Wechselrichtereinrichtung 14 umfasst einen Dreibrücken-Wechselrichter, der sechs Halbleiterschaltelemente, bevorzugt IGBT-Schaltelemente beinhaltet, um die Gleichspannung $V_{ZK}$ des Zwischenkreises 18 in eine PWM-modulierte Ansteuerspannung zum drehzahlgeregelten Betrieb des Synchronmotors 12 umzuformen. Die Halbleiterschaltelemente der Wechselrichtereinrichtung 14 werden im Normalbetrieb von der Sensorregelungseinheit 32 und im Notbetrieb von der Vektorregelungseinheit 30 phasenrichtig geschaltet, wobei die Regelungsumschalteinheit 34 zwischen diesen beiden Regelungseinheiten 30, 32 im Übergang von Normal- in Notbetrieb umschaltet. Allerdings ist ebenfalls denkbar, dass die Vektorregelungseinheit 30 sowohl im Normal- als auch im Notbetrieb die Drehzahlregelung übernimmt. Die Gleichrichtereinrichtung 16 umfasst eine Stromsteuerungseinheit 36, die die Höhe des in den Zwischenkreis 18 fließenden Stroms steuern kann, und insbesondere beim Anfahren der Pitchantriebsvorrichtung 10 einen übermäßigen Stromfluss unterbinden sowie die Höhe der Zwischenkreisspannung $V_{ZK}$ einstellen kann. Zur Messung des von der Gleichrichtereinrichtung 16 eingespeisten Stromes ist im DC-Zwischenkreis 18 eine Strommesseinrichtung 42 eingeschaltet, die die Stromhöhe an die Motorregelungseinrichtung 64 meldet, die wiederum die Stromsteuerungseinheit 36 zur Steuerung der Stromhöhe veranlassen kann.

Eine Energiespeichereinrichtung 20 ist über eine Koppeleinrichtung 24 unmittelbar an den Zwischenkreis 18 angeschlossen, wobei die Koppeleinrichtung 24 einen Energieaustausch zwischen Zwischenkreis 18 und Energiespeichereinrichtung 20 erst bei Überschreiten einer vorbestimmbaren Potentialdifferenz $V_f$ ermöglicht. In Aufbau, Wirkungsweise und im Ablauf bei einem Notbetrieb entspricht das Ausführungsbeispiel der Fig. 2 der der Fig. 1 in großen Teilen.

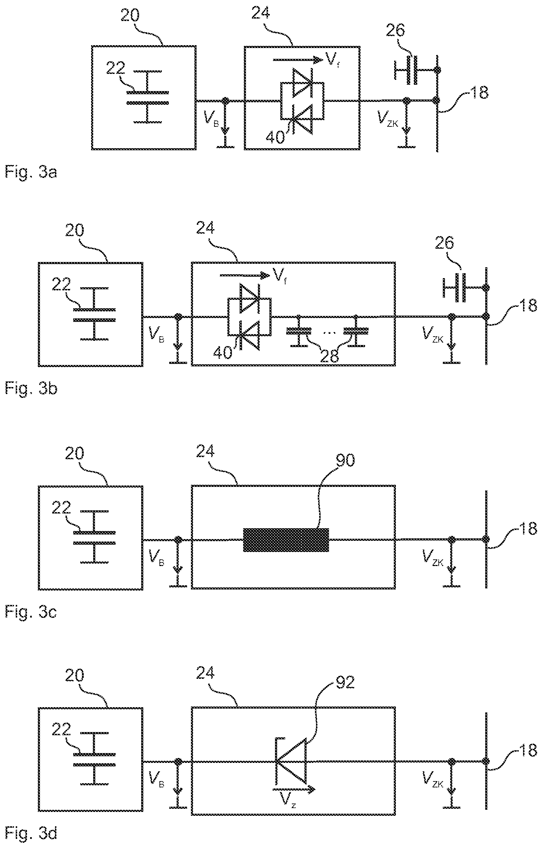

Fig. 3 zeigt schematisch vier Ausführungsbeispiele einer passiven Kopplungseinheit 24, die eine Ankopplung einer Energiespeichereinrichtung 20 an den Zwischenkreis 18 einer Pitchantriebsvorrichtung 10 ermöglicht. In einigen Fällen ist am Zwischenkreis 18 eine Zwischenkreiskapazität 26 angeschlossen, die Spannungsschwankungen ausgleichen, die Zwischenkreisspannung $V_{ZK}$ glätten, sowie Spannungsspitzen aufnehmen kann. Die Energiespeichereinrichtung 20 umfasst eine Kondensatoranordnung 22, die mittels in Reihe und/oder parallelgeschalteter Kondensatoren eine hochkapazitive Energiespeicherung des Backup-Energiespeichers ermöglicht. Die Energiespeichereinrichtung 20 hat die Aufgabe, Energie für eine kurzfristige Notbetriebsfahrt des Pitchantriebs 12 bereitzustellen, regenerative Energie bei Reversiervorgängen aufzunehmen, sowie Energie für Leistungsspitzen bei hohen Drehmomentanforderungen bereitzustellen. Die Kopplungseinheit 24 dient dazu, bei geringfügigen Spannungsunterschieden zwischen Zwischenkreis 18 und interner Kondensatorspannung der Energiespeichereinrichtung 20 einen Stromfluss zu unterbinden, da zum Ausgleich dieser Spannungsunterschiede die Zwischenkreiskapazität 26 heranzuziehen ist. Eine Kopplungseinheit 24 der Erfindung kann einzelne oder eine Kombination von Elementen der nachfolgend dargestellten Kopplungseinheiten 24 enthalten.

In Fig. 3a ist ein erstes Ausführungsbeispiel einer Kopplungseinheit 24 dargestellt, die zwei gegeneinander verschaltete Halbleiter-Leistungsdioden als Koppeldioden 40 mit einer Schwellwertspannung $V_f$ umfasst. Ein Stromfluss zwischen Energiespeichereinrichtung 20 und Zwischenkreis 18 findet erst statt, wenn der Potentialunterschied die Schwellwertspannung $V_f$ der Kopplungseinheit 24 überschreitet. Diese Schwellwertspannung $V_f$ kann durch Hintereinanderschaltung mehrerer Dioden beliebig vergrößert werden, so dass gegebenenfalls einstellbar eine "Arbeitsteilung" zwischen Zwischenkreiskapazität 26 und Energiespeichereinrichtung 20 möglich ist.

In Fig. 3b ist ein zweites Ausführungsbeispiel einer Kopplungseinheit 24 dargestellt, die vor den gegeneinander verschalteten Kopplungsdioden 40 eine oder mehrere parallel geschaltete weitere Zwischenkreiskapazitäten 28 zwischen den Potentialschienen des Zwischenkreises 30 umfasst. Die weiteren Zwischenkreiskapazitäten 28 erhöhen die Kapazität der Zwischenkreiskapazität 26, so dass eine Abfederung höherer Spannungsspitzen, eine verbesserte Welligkeitsunterdrückung und eine stabilere Zwischenkreisspannung $V_{ZK}$ ermöglicht werden.

Fig. 3c stellt ein drittes Ausführungsbeispiel einer Kopplungseinheit 24 dar, die eine Induktivitätsschaltung 90 umfasst. Die Induktivitätsschaltung 90 kann eine oder mehrere Induktivitäten umfassen, durch die Strom zwischen der Gleichspannungs-Energiespeichereinrichtung 20 und dem Gleichspannungs-Zwischenkreis 18 fließen kann. Die Induktivitätsschaltung 90 glättet Stromspitzen und dämpft Oberfrequenzen, wie sie bei schnellen Umschaltvorgängen der Wechselrichtereinrichtung 14, Ausfall eines Netzstrangs, Lastwechsel des Motors 12 oder sonstigen Störungen auftreten können. Somit wird die Energiespeichereinrichtung 20 konstant belastet und vor hochfrequenten Stromschwankungen geschützt, wodurch sich die Lebensdauer erhöht.

Des weiteren zeigt Fig. 3d eine Kopplungseinheit 24, die eine Zener-Diodenschaltung 92 umfasst. Die Zener-Diodenschaltung 92 kann eine oder mehrere Zener-Dioden, bzw. vergleichbare Bauteile umfassen die den Zweck erfüllen, dass erst, wenn die Zwischenkreisspannung $V_{ZK}$ um den Betrag der Zenerspannung $V_Z$ geringer als die Spannung $V_B$ der Gleichspannungs-Energiespeichereinrichtung 20 ist, ein Stromfluss von Energiespeichereinrichtung 20 in Richtung Zwischenkreis 18 zustande kommt. Aufgrund der Eigenart der Zenerdiode wird regenerative Energie des Zwischenkreises 18 in die Energiespeichereinrichtung 20 überführt. Solange die Spannung $V_B$ des Energiespeichers 20 um $V_Z$ höher als die Zwischenkreisspannung $V_{ZK}$ ist, kann die im Energiespeicher 20 enthaltene Energie an den Zwischenkreis 18 abgegeben werden. Im Betrieb bedeutet dies, dass die Spannung $V_B$ des Energiespeichers 20 zwischen $V_{ZK}+V_Z$ und $V_{Bmax}$ (Maximalspannung des Energiespeichers 20) variieren kann.

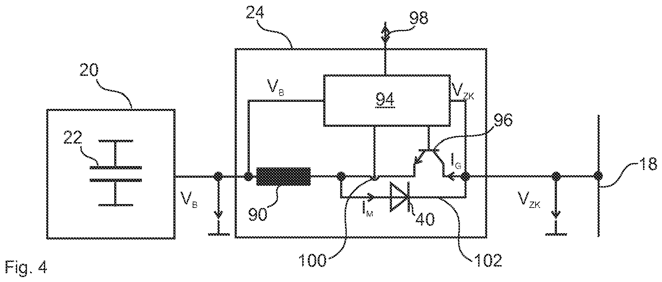

In Fig. 4 ist eine aktive Kopplungseinheit 24 dargestellt, durch die die Energiespeichereinrichtung 20 vom Zwischenkreis 18 zu- und abschaltbar ist, so dass die Energiespeichereinrichtung 20 vom Zwischenkreis 18 entkoppelbar ist. Die Kopplungseinheit 24 umfasst ein Steuermittel 94, dass mit einem Schaltmittel 96, in diesem Fall einem Leistungstransistor z.B. IGBT, verbunden ist. Des Weiteren umfasst das Steuermittel 94 einen Stromsensor 100 zur Erfassung eines Ladestroms $I_G$, der im zugeschalteten Zustand von Zwischenkreis 18 zur Energiespeichereinrichtung 24 fließen kann, sowie zwei Spannungsmesssensoren, die die Spannung $V_B$ auf Seiten der Energiespeichereinrichtung 20 sowie $V_{ZK}$ auf Seiten des Zwischenkreises 18 erfassen können. Schließlich umfasst die Kopplungseinheit 24 eine Induktivitätsschaltung 90 und einen Überbrückungszweig 102, der eine Kopplungsdiode 40 enthält, und der das Schaltmittel 96 überbrückt, so dass, sofern $U_B>U_{ZK}$ ist, Strom $I_M$ von der Energiespeichereinrichtung 20 zum Zwischenkreis 18 fließen kann. Durch Einschaltung des Schaltmittels 96 durch das Steuermittel 94 kann regenerativer Strom oder Aufladestrom $I_G$ vom Zwischenkreis 18 in die Energiespeichereinrichtung 20 fließen. Falls die Zwischenkreisspannung $U_B$ unter dem Niveau der Energiespeicherspannung $U_{ZK}$ fällt, versorgt die Energiespeichereinrichtung über die Diode 40 den Zwischenkreis 18 mit Strom. Das Schaltmittel 94 kann mit einer übergeordneten Steuerung, beispielsweise mit einer (nicht dargestellten) Motorsteuereinrichtung verbunden sein, und kann externe Befehle zu einer regelmäßigen und/oder gesteuerten Aufladung des Energiespeichers 20, zur Zuschaltung während des Hochfahrens des Wechselrichters 14, oder zur Trennung während eines Motorbetriebes oder im Falle bestimmter Betriebsbereichen des Motors 12, z.B. während eines Hochlastbetriebes oder eines Hochfrequenzbetriebes empfangen. Das Steuermittel 94 kann statisch z.B. bei Empfang eines externen Ein- oder Ausschaltsignals, das Schaltmittel 96 aktivieren, oder beispielsweise eine gesteuerte Aktivierung des Schaltmittels 96 durch ein Regelverfahren, z.B. durch einen geschlossenen Regelkreis zur Regelung des Ladestroms $I_G$ vornehmen.

Fig. 5 zeigt schematisch den prinzipiellen Aufbau eines permanentmagneten Läufers 74 einer IPM-Synchronmaschine. Der Läufer 74 weist eine Läuferachse 80 auf und umfasst ein Läuferblechpaket 76, das entsprechend der Anzahl verborgener Magnete 78 profilierte Polausbuchtungen aufweist. Dass Läuferblechpaket 76 ist zur Unterdrückung von Wirbelstromverlusten lamelliert. Im Inneren des Läuferblechpakets sind 4 um jeweils 90° um die Läuferachse 80 versetzte Permanentmagnete 78 vergraben, d.h. im Gegensatz zu SPM-Motoren radial nach innen versetzt. Aufgrund dieser Bauweise weist dieser Motorentyp einen ausgeprägten Reluktanzeffekt auf und ist für eine sensorlose Regelung besonders im niedrigen Drehzahlbereich sowie im Feldschwächbetrieb bei geringer Zwischenkreisspannung, die von der Energiespeichereinrichtung 20 zur Verfügung gestellt werden kann, hervorragend geeignet.

In Fig. 6 ist eine Drehmoment/Drehzahl $M/U$-Kennlinie eines bevorzugten IPM-Motors gegenüber einem SPM-Motor bei gleichen Leistungsdaten gegenübergestellt. Der IPM-Motor weist einen höheren Nenndrehzahlbereich bei gleicher Stromaufnahme und deutlich höhere Drehmomente $M$ bei gleichen Drehzahlen $U$ auf, und ist somit dem SPM-Motor besonders im Feldschwächbetrieb deutlich überlegen. Somit kann insbesondere im Notbetrieb bei einer reduzierten Zwischenkreisspannung $V_{ZK}$, die von einer Energiespeichereinrichtung 20 zur Verfügung gestellt werden kann, ein hohes Drehmoment $M$ für eine Notfahrt bei hohen Drehzahlen $U$ bereitgestellt werden, wobei bei Ausfall von Drehsensoren aufgrund des ausgeprägten Reluktanzeffektes eine sensorlose feldorientierte Vektorregelung selbst bei niedrigen Drehzahlen $U$ durchgeführt werden kann.

**Patentansprüche**

1. Notbetriebsfähige Pitchantriebsvorrichtung (10) zur Verstellung eines Rotorblatts einer Wind- oder Wasserkraftanlage umfassend eine Wechselrichtereinrichtung (14) und einen Drehstrom-Antriebsmotor, **dadurch gekennzeichnet, dass** der Antriebsmotor ein Drehstrom-IPM-Synchronmotor (Interior Permanent Magnets) (12) ist, und dass sowohl im Normalals auch im Notbetrieb eine Gleichspannungs-Energiespeichereinrichtung (20) direkt oder über eine passive dioden- und/oder induktivitätenbasierte Kopplungseinheit (24) zur Unterdrückung störender Spannungsspitzen an einen Gleichspannungs-Zwischenkreis (18) zwischen einer Gleichrichtereinrichtung (16) und der Wechaelrichtereinrichtung (14) zur zumindest kurzfristigen Energieversorgung des IPM-Synchronmotors (12) gekoppelt ist, so dass sich ein Stromfluss zwischen Energiespeichereinrichtung (20) und Zwischenkreis (18) zumindest bei einem Spannungsunterschied größer als einem kopplungsbauteilspezifischen Spannungswert Vf einstellt, wodurch der IPM-Synchronmotor (12) auch bei einer absinkenden Zwischenkreisspannung $U_{ZK}$ zumindest kurzfristig drehzahlgeregelt betreibbar ist.

2. Vorrichtung nach Anspruch 1, **dadurch gekennzeichnet, dass** der IPM-Synchronmotor (12) für einen hohen Drehzahlbereich 300 bis 3000 U/Min ausgelegt ist, wobei ein optimaler Wirkungsgrad im unteren Drehzahlbereich, insbesondere im Bereich einer Nenndrehzahl von 500 U/Min erreichbar ist.

3. Vorrichtung nach Anspruch 1 oder 2, **dadurch gekennzeichnet, dass** die Gleichspannungs-Energiespeichereinrichtung (20) eine hochkapazitive Kondensatoranordnung (22) ist.

4. Vorrichtung nach einem der vorgenannten Ansprüche 1 bis 3, **dadurch gekennzeichnet, dass** die Gleichspannungs-Energiespeichereinrichtung (20) für eine Zwischenkreisspannung $U_{ZK}$ von 100V DC bis 650V DC ausgelegt ist.

5. Vorrichtung nach einem der vorgenannten Ansprüche, **dadurch gekennzeichnet, dass** die Kopplungseinheit (24) zur Kapazitätserhöhung einer Zwischenkreiskapazität (26) mindestens eine weitere Zwischenkreiskapazität (28) umfasst.

6. Vorrichtung nach Anspruch einem der vorgenannten Ansprüche, **dadurch gekennzeichnet, dass** die Kopplungseinheit (24) ein Steuermittel (94) und ein Schaltmittel (96) umfasst, wodurch ein Ladestrom $I_G$ von Gleichspannungs-Zwischenkreis (18) zum Gleichspannungs-Speichereinrichtung (20) schaltbar ist, wobei dem Schaltmittel (96) ein Überbrückungszweig (102), der eine Kopplungsdiode (40) zur Versorgung des Gleichspannungs-Zwischenkreises (18) mit einem Versorgungsstrom $I_M$ umfasst, parallelgeschaltet ist, so dass ein Versorgungsstrom $I_M$ unabhängig vom Schaltzustand des Schaltmittels (96) fließen kann.

7. Vorrichtung nach Anspruch 6, **dadurch gekennzeichnet, dass** zumindest das Schaltmittel (96) ein Halbleiter-Schaltmittel ist und in einem Gehäuse eines Halbleiter-Leistungsmodul zusammen mit Halbleiter-Schaltmitteln der Wechselrichtereinrichtung (14) und/oder Halbleiter-Brückendioden der Gleichrichtereinrichtung (16), bevorzugt in einem IPM-Gehäuse (Integrated Power Modul) integriert ist.

8. Vorrichtung nach einem der vorgenannten Ansprüche, **dadurch gekennzeichnet, dass** die Wechselrichtereinrichtung (14) eine feldorientierte Vektorregelungseinheit (30) zur sensorlosen Drehzahlregelung des Synchronmotors (12) umfasst, die zumindest in einem Betriebsmode und bevorzugt in einem niedrigen Drehzahlbereich des Synchronmotors (12) von 300 bis 700 U/Min, insbesondere in einem Drehzahlbereich von 500 U/Min eine Drehzahlregelung vornehmen kann.

9. Vorrichtung nach Anspruch 8, **dadurch gekennzeichnet, dass** die Wechselrichtereinrichtung (14) eine Sensorregeleinheit (32) umfasst, die mit einem oder mehreren mechanischen Drehzahl-/Drehwinkel-/ Positionssensoren (46, 50, 52) zur Drehzahlregelung des Synchronmotors (12) verbunden ist, und eine Regelungsumschalteinheit (34) umfasst, die zwischen der Sensorregeleinheit (32) für eine Drehzahlregelung im Normalbetrieb und der Vektorregelungseinheit (30) für eine Drehzahlregelung im Notbetrieb umschalten kann.

10. Vorrichtung nach einem der vorgenannten Ansprüche, **dadurch gekennzeichnet, dass** die Gleichrichtereinrichtung (16) eine Stromsteuerungseinheit (36) zur Begrenzung des aufgenommenen Netzstromes und/oder zur stromgeregelten Auflladung der Gleichspannungs-Energiespeichereinrichtung (20), der Zwischenkreiskapazität (26) und der Wechselrichtereinrichtung (14) umfasst, wobei die Stromsteuerungseinheit (36) im Normalbetrieb die Zwischenkreisspannung $U_{ZK}$ auf einem voreinstellbaren Wert regeln kann.

11. Vorrichtung nach einem der vorgenannten Ansprüche, **dadurch gekennzeichnet, dass** am Gleichspannungs-Zwischenkreis (18) eine Not-Bremswiderstandseinheit (38) zur Ableitung von elektrischer Energie für eine Schnellbremsung des Synchronmotors (12) zuschaltbar angeschlossen ist, wobei die Bremswiderstandseinheit (38) insbesondere im Falle einer erhöhten Zwischenkreisspannung $U_{ZK}$ zuschaltbar ist.

**Claims**

1. A pitch drive device (10) capable of emergency operation for adjusting a rotor blade of a wind or water power plant, comprising an inverter device (14) and a three-phase current drive motor, **characterized in that** the drive motor is a three-phase current IPM (Interior Permanent Magnets) synchronous motor (12), and that in both normal operation and emergency operation, a direct voltage energy storage device (20) is connected directly, or via a passive diode-based and/or inductor-based connecting unit (24) for suppressing troublesome voltage peaks, to a direct voltage intermediate circuit (18) between a rectifier device (16) and the inverter device (14) in order to at least temporarily supply energy to the IPM synchronous motor (12), so that a current flow between the energy storage device (20) and the intermediate circuit (18) arises at least at a voltage difference greater than a voltage value Vf specific to the connecting component, whereby the IPM synchronous motor (12) can be operated in a rotational speed-regulated manner at least temporarily even when the intermediate circuit voltage $U_{ZK}$ is dropping.

2. The device according to claim 1, **characterized in that** the IPM synchronous motor (12) is designed for a high rotational speed range of 300 to 3000 rpm, wherein an optimum efficiency level can be achieved in the lower rotational speed range, in particular in the range of a nominal rotational speed of 500 rpm.

3. The device according to claim 1 or 2, **characterized in that** the direct voltage energy storage device (20) is a high-capacitance capacitor arrangement (22).

4. The device according to one of the preceding claims 1 to 3, **characterized in that** the direct voltage energy storage device (20) is designed for an intermediate circuit voltage $U_{ZK}$ of 100 V DC to 650 V DC.

5. The device according to one of the preceding claims, **characterized in that** the connecting unit (24) comprises at least an additional intermediate circuit capacitor (28) to increase the capacitance of an intermediate circuit capacitor (26).

6. The device according to one of the preceding claims, **characterized in that** the connecting unit (24) comprises a control means (94) and a switching means (96), whereby a charging current $I_G$ can be switched from the direct voltage intermediate circuit (18) to the direct voltage storage device (20), wherein the switching means (96) is connected in parallel to a bridging branch (102), which comprises a connecting diode (40) for supplying the direct voltage intermediate circuit (18) with a supply current $I_M$ so that a supply current $I_M$ can flow independently of the switching state of the switching means (96).

7. The device according to claim 6, **characterized in that** at least the switching means (96) is a semiconductor switching means and is integrated into a housing of a semiconductor power module together with semiconductor switching means of the inverter device (14) and/or semiconductor bridging diodes of the rectifier device (16), preferably into an IPM housing (Integrated Power Module).

8. The device according to one of the preceding claims, **characterized in that** the inverter device (14) comprises a field-oriented vector control unit (30) for the rotational speed regulation of the synchronous motor (12) without a sensor, which unit can carry out a rotational speed regulation at least in one operating mode and preferably in a low rotational speed range of the synchronous motor (12) of 300 to 700 rpm, in particular in a rotational speed range of 500 rpm.

9. The device according to claim 8, **characterized in that** the inverter device (14) comprises a sensor control unit (32), which is connected to one or several mechanical rotational speed / rotation angle / position sensors (46, 50, 52) for the rotational speed regulation of the synchronous motor (12) and comprises a regulation switching unit (34), which can switch between the sensor control unit (32) for a rotational speed regulation during normal operation and the vector control unit (30) for a rotational speed regulation during emergency operation.

10. The device according to one of the preceding claims, **characterized in that** the rectifier device (16) comprises a current control unit (36) for limiting the mains current consumed and/or for the current-controlled charging of the direct voltage energy storage device (20), of the intermediate circuit capacitor (26), and of the inverter device (14), wherein the current control unit (36) can regulate the intermediate circuit voltage $U_{ZK}$ to a pred efinable value during normal operation.

11. The device according to one of the preceding claims, **characterized in that** an emergency braking resistor unit (38) is connected to the direct voltage intermediate circuit (18) in a switchable manner for discharging electrical energy for emergency braking of the synchronous motor (12), wherein the braking resistor unit (38) can be switched on in particular in the case of an increased intermediate circuit voltage $U_{ZK}$.

## Revendications

1. Dispositif d'entraînement de calage pouvant être utilisé en fonctionnement de secours (10) pour le réglage d'un pas de pale de rotor d'une éolienne ou d'installation de centrale hydroélectrique, comprenant un dispositif onduleur (14) et un moteur d'entraînement à courant triphasé, **caractérisé en ce que** le moteur d'entraînement est un moteur synchrone à aimants permanents (Interior Permanent Magnets) à courant triphasé (12) et **en ce que** pour un fonctionnement normal comme pour un fonctionnement de secours, un dispositif de stockage d'énergie à tension continue (20) est couplé directement ou par le biais d'une unité de couplage basée sur l'inductance et/ou sur une diode passive (24) pour la suppression des pics de tension parasites au niveau d'un circuit intermédiaire à tension continue (18) entre un dispositif redresseur (16) et le dispositif onduleur (14) au moins pour une alimentation en énergie à court terme du moteur IPM synchrone (12), de sorte qu'une circulation du courant entre le dispositif de stockage d'énergie (20) et le circuit intermédiaire (18) soit réglée supérieure d'au moins une différence de tension à une valeur de tension spécifique au composant de couplage Vf, moyennant quoi le moteur IPM synchrone (12) peut être entraîné même lors d'une diminution de la tension $U_{ZK}$ du circuit intermédiaire, au moins à court terme avec régulation du régime.

2. Dispositif selon la revendication 1, **caractérisé en ce que** le moteur synchrone IPM (12) est conçu pour une plage de régime élevée de 300 à 3000 tr/min, dans lequel un rendement optimal peut être obtenu dans la plage de régime inférieure, notamment dans la plage d'un régime nominal de 500 tr/min.

3. Dispositif selon la revendication 1 ou 2, **caractérisé en ce que** le dispositif de stockage d'énergie à tension continue (20) est un agencement de condensateur à haute capacité (22).

4. Dispositif selon l'une des revendications précédentes 1 à 3, **caractérisé en ce que** le dispositif de stockage d'énergie à tension continue (20) est conçu pour une tension de circuit intermédiaire $U_{ZK}$ de 100 V DC à 650 V DC.

5. Dispositif selon l'une des revendications précédentes, **caractérisé en ce que** l'unité de couplage (24) comprend, pour l'augmentation de capacité d'une capacité de circuit intermédiaire (26), au moins une capacité de circuit intermédiaire (28) supplémentaire.

6. Dispositif selon l'une des revendications précédentes, **caractérisé en ce que** l'unité de couplage (24) comprend un moyen de commande (94) et un moyen de commutation (96), grâce auquel un courant de charge $I_G$ du circuit intermédiaire à tension continue (18) peut être commuté vers le dispositif de stockage à tension continue (20), dans lequel une branche de pontage (102), qui comprend une diode de couplage (40) pour l'alimentation du circuit intermédiaire à tension continue (18) avec un courant d'alimentation $I_M$, est commutée en parallèle au moyen de commutation (96), de sorte qu'un courant d'alimentation $I_M$ puisse circuler indépendamment de l'état de commutation du moyen de commutation (96).

7. Dispositif selon la revendication 6, **caractérisé en ce qu'**au moins le moyen de commutation (96) est un moyen de commutation à semi-conducteur et que, dans un boîtier d'un module de puissance à semi-conducteur conjointement avec le moyen de commutation à semi-conducteur est intégré le dispositif onduleur (14) et/ou des diodes de pont à semi-conducteurs du dispositif redresseur (16), de préférence dans un boîtier IPM (Integrated Power Modul).

8. Dispositif selon l'une des revendications précédentes, **caractérisé en ce que** le dispositif onduleur (14) comprend une unité de régulation de vecteur à champ orienté (30) pour la régulation de régime sans capteur du moteur synchrone (12), qui peut au moins effectuer une régulation de régime dans un mode de fonctionnement et de préférence dans une plage de régime faible du moteur synchrone (12) de 300 à 700 tr/min, notamment dans une plage de régime de 500 U/Min.

9. Dispositif selon la revendication 8, **caractérisé en ce que** le dispositif onduleur (14) comprend une unité de régulation de capteur (32), qui est reliée à un ou plusieurs capteurs de position/de régime/d'angle de rotation mécaniques (46, 50, 52) pour la régulation de régime du moteur synchrone (12) et comprend une unité de commutation de régulation (34), qui peut commuter entre l'unité de régulation de capteur (32) pour une régulation de régime en fonctionnement normal et l'unité de régulation de vecteur (30) pour une régulation de régime en fonctionnement de secours.

10. Dispositif selon l'une des revendications précédentes, **caractérisé en ce que** le dispositif redresseur (16) comprend une unité de commande de courant (36) destinée à limiter le courant de secteur capté et/ou pour un chargement régulé en courant du dispositif de stockage d'énergie à tension continue (20), la capacité de circuit intermédiaire (26) et le dispositif onduleur (14), dans lequel l'unité de commande de courant (36) peut réguler, en fonctionnement normal, la tension de circuit intermédiaire $U_{ZK}$ sur une valeur pré-réglable.

11. Dispositif selon l'une des revendications précédentes, **caractérisé en ce qu'**une unité de résistance au freinage d'urgence (38) destinée à dériver l'énergie électrique pour un freinage rapide du moteur synchrone (12) est raccordée au circuit intermédiaire à tension continue (18) de manière commutable, dans lequel l'unité de résistance au freinage (38) peut être commutée notamment dans le cas d'une tension de circuit intermédiaire accrue $U_{ZK}$.

Fig. 1

Fig. 2

Fig. 3a

Fig. 3b

Fig. 3c

Fig. 3d

Fig. 4

Fig. 5

Fig. 6

**IN DER BESCHREIBUNG AUFGEFÜHRTE DOKUMENTE**

**In der Beschreibung aufgeführte Patentdokumente**

- DE 10335575 A1
- US 20090155075 A1